## Europäisches Patentamt
## European Patent Office
## Office européen des brevets

(19)

(11) Veröffentlichungsnummer: **0 334 832**
**B1**

(12) # EUROPÄISCHE PATENTSCHRIFT

(45) Veröffentlichungstag der Patentschrift:
**03.10.90**

(51) Int. Cl.⁵: **E06B 3/66**, B65G 49/06

(21) Anmeldenummer: **89890019.6**

(22) Anmeldetag: **25.01.89**

(54) **Vorrichtung zum Ansetzen von Distanzmitteln.**

(30) Priorität: **25.03.88  AT 801/88**

(43) Veröffentlichungstag der Anmeldung:
**27.09.89 Patentblatt 89/39**

(45) Bekanntmachung des Hinweises auf die Patenterteilung:
**03.10.90 Patentblatt 90/40**

(84) Benannte Vertragsstaaten:
**AT BE CH DE ES FR GB GR IT LI LU NL SE**

(56) Entgegenhaltungen:
**EP-A- 0 176 911**
**DE-A- 1 904 875**

(73) Patentinhaber: **MAWAK Warenhandelsgesellschaft m.b.H., Khunngasse 17, A-1030 Wien(AT)**

(72) Erfinder: **Mader, Leopold, Gaistechen 39, A-3364 Neuhofen(AT)**

(74) Vertreter: **Beer, Manfred, Dipl.-Ing. et al, Lindengasse 8, A-1070 Wien(AT)**

ACTORUM AG

## Beschreibung

Die Erfindung betrifft eine Vorrichtung zum Ansetzen von Distanzplättchen auf Glasscheiben, insbesondere auf Isolierglasscheiben, mit einer Vorratsspule für einen Streifen aus Kork od.dgl., der einseitig mit einer Klebeschicht bedeckt ist, die durch eine Schutzfolie abgedeckt ist, mit einem Antrieb zum Fördern des Streifens zu einer Schneidvorrichtung und mit einer im Anschluß an die Schneidvorrichtung vorgesehenen, annähernd senkrecht zur Bewegungsrichtung des Streifens vorschiebbaren Andrückeinrichtung für die Schneidvorrichtung.

Isolierglasscheiben werden nach ihrer Herstellung auf Böcken abgestellt, wobei so vorgegangen wird, daß zunächst Isolierglasscheiben mit größeren Abmessungen abgestellt werden, vor die dann Isolierglasscheiben mit zunehmend kleineren Abmessungen abgestellt werden. Um zu vermeiden, daß die Glasscheiben der nebeneinander stehenden und aneinander lehnenden Isolierglasscheiben unmittelbar aneinander anliegen, werden auf die rückseitigen Glasscheiben der Isolierglasscheiben von Hand aus mit einer Klebeschicht versehene Korkplättchen, in der Regel quadratische Korkplättchen, angeklebt. Diese Korkplättchen müssen auf der Rückseite der Glasscheiben der Isolierglasscheiben angebracht werden, d.h. auf den Seiten, die den seitlichen Abstützwänden (Rollenwände, Luftkissenwände u.dgl.) in Vorrichtungen zum Herstellen von Isolierglasscheiben zugekehrt sind, da an den Vorderseiten Hebegeräte, die beispielsweise mit Saugköpfen ausgestattet sind, angreifen, um die Isolierglasscheiben von der Fertigungslinie abzuheben und auf den Lagerböcken abzustellen.

Es ist auch schon vorgeschlagen worden, auf die Vorderseite von Isolierglasscheiben Kunststoff aufzuspritzen (z.B. Thermoplaste od. dgl.), der dann nach dem Abkühlen als Distanzmittel dienen soll (EP-A 0 176 911). Aus den oben genannten Gründen ist diese Arbeitsweise nicht zielführend, da es vorkommen kann, daß kleinere Glastafeln zwischen den Kunststoff-Distanzmitteln der dahinter stehenden Isolierglasscheiben anliegen und die zugekehrte Glasscheibe zerkratzen.

Eine Vorrichtung mit den im einleitenden Teil des unabhängigen Patentanspruches 1 genannten Merkmalen ist aus der DE-A 1 904 874 bekannt. Diese bekannte Vorrichtung soll auch dazu geeignet sein, abgetrennte Teilstücke von Distanzstreifen auf Glasplatten aufzubringen, während sich diese bewegen. Hierzu ist die Vorrichtung mit einer Zuführtrommel ausgestattet, die drehangetrieben ist und den Distanzstreifen transportiert. Von der Trommel wird der Distanzstreifen durch eine Schlitzführung geführt, an deren Ende eine Schneidvorrichtung vorgesehen ist. Dabei drückt eine neben der Schneidvorrichtung angeordnete Andrückrolle das Ende des Distanzstreifens an die Glastafel, noch bevor der Distanzstreifen mit Hilfe der Schneidvorrichtung abgetrennt worden ist.

Der Erfindung liegt die Aufgabe zugrunde, eine Vorrichtung anzugeben, mit welcher das Ansetzen von Distanzplättchen durchgeführt werden kann ohne daß von Hand aus durchzuführende Tätigkeiten notwendig sind.

Erfindungsgemäß wird diese Aufgabe mit einer Vorrichtung zum Ansetzen von Distanzplättchen auf Glasscheiben, insbesondere Glasscheiben von Isolierglasscheiben gelöst, die dadurch gekennzeichnet ist, daß die Andrückeinrichtung einen in seiner Ausgangslage abgabeseitig der Schneidvorrichtung vorgesehenen Saugkopf aufweist, der die vom Streifen abgelängten, noch nicht an die Glasscheibe angesetzten Distanzplättchen erfaßt, und daß der Saugkopf auf die ihm zugewandte Fläche einer Glasscheibe, auf die ein Distanzplättchen anzusetzen ist, hin vorschiebbar ist.

Mit der erfindungsgemäßen Vorrichtung können Distanzplättchen, die beispielsweise aus Kork oder gepreßtem Korkschrot bestehen, nach der Versiegelung der Isolierglasscheiben, was für gewöhnlich der letzte Arbeitsschritt bei der Herstellung von Isolierglas ist, maschinell, d.h. ohne Zutun von Hand aus, angesetzt werden.

Die erfindungsgemäße Vorrichtung kann mit besonderem Vorteil in die seitliche Abstützung (Rollenfeld od.dgl.) eines Auslaufförderers einer Isolierglasherstellungslinie integriert werden, wobei bevorzugt ist, daß mehrere erfindungsgemäße Vorrichtungen über die seitliche Abstützung des Auslaufförderers oder der Isolierglasversiegelungsanlage verteilt eingebaut werden. Ein derartiger Auslaufförderer, der in eine Vorrichtung zum Versiegeln von Isolierglasscheiben integriert ist ist z.B. aus der DE-C 30 38 425 bekannt.

Da mit erfindungsgemäßen Vorrichtungen Distanzplättchen auf der der seitlichen Abstützung zugekehrten Glasscheibe, d.h. der, bezogen auf die Isolierglaslinie, hinteren Glasscheibe von Isolierglasscheiben angesetzt werden, ergeben sich beim Abstellen der Isolierglasscheiben auf die Lagerböcke keine Schwierigkeiten.

Vorteilhafte Ausbildungen der Erfindung sind Gegenstand der Unteransprüche.

Eine Ausführungsform der erfindungsgemäßen Vorrichtung wird nachstehend unter Bezugnahme auf die angeschlossenen Zeichnungen näher erläutert. Es zeigt

Fig. 1 eine Vorrichtung zum Ansetzen von Distanzplättchen in Draufsicht und

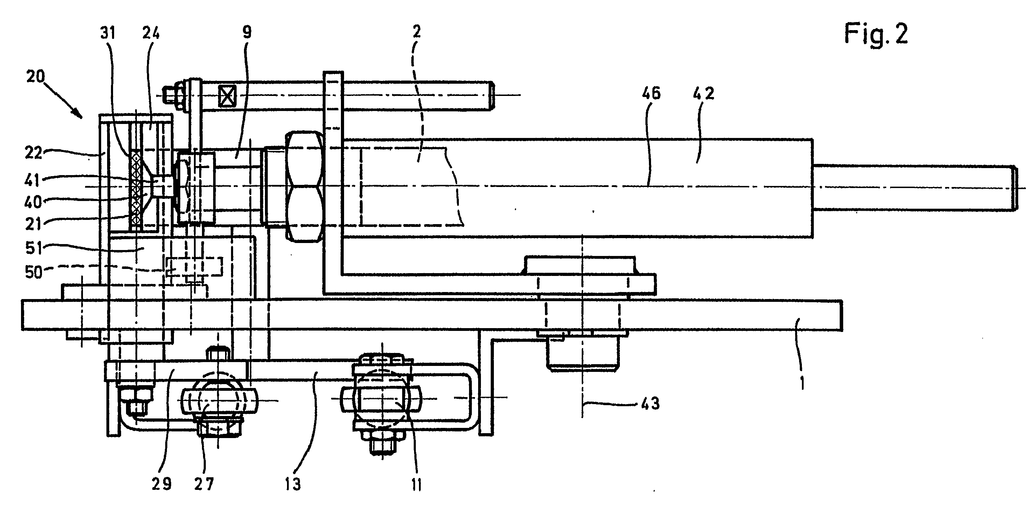

Fig. 2 die Vorrichtung aus Fig. 1 von rechts gesehen.

Alle Bestandteile der erfindungsgemäßen Vorrichtung sind auf einer beispielsweise aus Blech gefertigten Grundplatte 1 montiert.

Von einer nicht gezeigten Vorratsrolle wird ein Streifen 2 aus gepreßtem Korkschrot, der einseitig mit einer Klebeschicht versehen ist, die ihrerseits von einer Schutzfolie 3 abgedeckt ist, in Richtung des Pfeiles 4 einem Führungskanal 5, bestehend aus zwei Blechstreifen 6 und 7, zugeführt. Der Antrieb 8 für den schrittweisen Vorschub des Streifens 2 besteht aus einer am Streifen 2 angreifenden Reibrolle 9, der gegenüberliegend eine Andrückrolle 10 angeordnet ist. Die Rollen 9 und 10

sind auf der Grundplatte 1 gelagert. Zum Antrieb der Reibrolle 9 ist ein Druckmittelzylinder 11 vorgesehen, dessen Kolben 12 mit einem Hebelarm 13 gelenkig verbunden ist. Der Hebelarm 13 ist mit der Welle der Reibrolle 9 über einen Freilauf 14 gekuppelt, so daß die Reibrolle 9 nur beim Hub der Kolbenstange 12 in Richtung des Pfeiles 15 im Sinne eines Weitertransportes des Streifens 2 in Richtung des Pfeiles 4 gedreht wird, wogegen ein Rückhub der Kolbenstange 12 keine Drehung der Reibrolle 9 bewirkt.

Am auslaufseitigen Ende des Führungskanal 5 ist eine Umlenkung 16 vorgesehen, über welche die Schutzfolie 3 nach dem Abziehen vom Streifen 2 durch einen weiteren Führungskanal 17 zu einer Aufwickelrolle 18 gefördert wird. Der Aufwickelrolle 18 ist ein weiterer, nicht gezeigter Drehantrieb zugeordnet, um die Schutzfolie 3 aufzuwickeln.

Bezogen auf die Förderrichtung 4 ist nach der Umlenkung 16 eine Schneidvorrichtung 20 vorgesehen, durch welche vom Streifen 2 Distanzplättchen 21 abgelängt werden. Die Schneidvorrichtung 20 besteht aus einem senkrecht zur Grundplatte 1 ausgerichteten, auf dieser befestigten, hohlen Zylinder 22, der eine Eintrittsöffnung 23 und eine Austrittsöffnung 24 für den Streifen 2 besitzt. Im Hohlzylinder 22 ist ein teilzylinderförmiges Schneidmesser 25 um eine zur Grundplatte 1 senkrechte Achse 26 verdrehbar aufgenommen. Zur Betätigung des Schneidmessers 25 ist ein Druckmittelmotor 27 vorgesehen, dessen Kolbenstange 28 mit einem um die Achse 26 verschwenkbar gelagerten Hebelarm 29 verbunden ist. Im Inneren des hohlen Zylinders 22 ist in der Nähe der Wand desselben eine Rolle 30 vorgesehen, wobei der Streifen 2 zwischen der der Achse 26 zugekehrten Fläche des Schneidmessers 25 und der Rolle 30 durchgeführt ist. Die Rolle 30 ist so wie das Schneidmesser 25 auf dem Hebelarm 29 montiert, der als Träger für die genannten Bauteile dient. Durch Betätigen des Zylinders 27 wird vom Streifen 2 jeweils ein Distanzplättchen 21 zwischen der Kante 31 der Öffnung 24 des Hohlzylinders 22 und der Schneidkante 32 des Schneidmessers 25 abgelängt.

Neben der Austrittsöffnung 24 des hohlen Zylinders 22 ist ein Saugkopf 40 vorgesehen, der von der Kolbenstange 41 eines Druckmittelzylinders 42 getragen wird. Die Kolbenstange 41 des Druckmittelzylinders 42 ist hohl ausgebildet, so daß der Saugkopf 40 mit Unterdruck beaufschlagt werden kann.

Der Druckmittelzylinder 42 ist an der Grundplatte 1 um eine Achse 43, die zur Grundplatte 1 senkrecht ausgerichtet ist, frei verschwenkbar gelagert.

Durch Beaufschlagung des Druckmittelzylinders 42 wird der Saugkopf 40, der ein vom Streifen 2 abgelängtes Distanzplättchen 21 trägt, auf die der Vorrichtung zugekehrte Seite einer Glasscheibe einer Isolierglasscheibe hin bewegt und drückt das Distanzplättchen 21 an, so daß es festklebt.

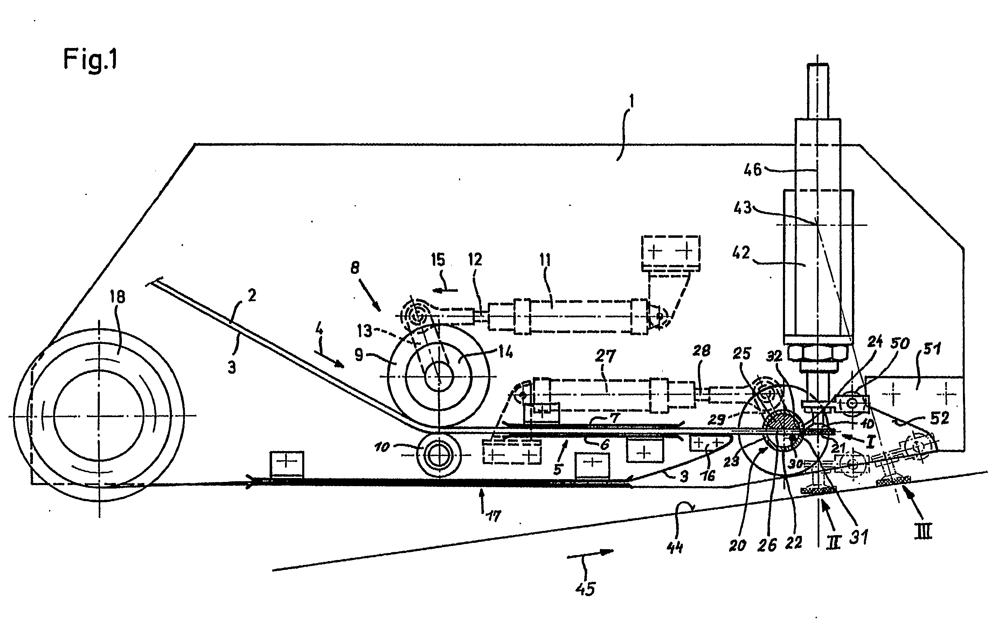

Um die Taktzeit der Isolierglasherstellungslinie während des Ansetzens der Distanzplättchen 21 nicht zu beeinflussen, geschieht das Ansetzen der Distanzplättchen 21 auf die der Vorrichtung zugekehrt Seite 44 der Glasscheibe der Isolierglasscheibe, während sich diese in Richtung des Pfeiles 45 bewegt. Dies ist ohne weiteres möglich, da der Druckmittelzylinder 42 um die Achse 43 frei verschwenkbar ist und so der Saugkopf 40 während des Ansetzvorganges der Bewegung der Isolierglasscheibe (Pfeil 45) folgen kann. Diese Bewegungen sind in Fig. 1 durch die eingezeichneten Bewegungsstellungen I, II und III des Saugkopfes 40 veranschaulicht. Damit das Distanzplättchen 21 flächig an die Seite 44 der Isolierglasscheibe angesetzt werden kann, ist der Saugkopf 40 gegenüber der Achse 46 der Kolbenstange 41 beweglich.

Sobald der Saugkopf 40 die Stellung III in Fig. 1 erreicht hat und das Distanzplättchen 21 angesetzt wurde, wird das Vakuum am Saugkopf 40 aufgehoben und dieser durch entgegengesetztes Beaufschlagen des Druckmittel zylinders 42 zurückgezogen.

Um den Saugkopf 40 wieder in die Stellung I zurückzubewegen, ist in der Nähe des Saugkopfes 40 an der Kolbenstange 41 eine Führungsrolle 50 montiert, die um eine zur Grundplatte 1 senkrechte Achse frei drehbar ist. Der Führungsrolle 50 ist eine an der Grundplatte 1 montierte Führung 51 mit einer Führungsfläche 52 zugeordnet, die bewirkt, daß beim Abrollen der Führungsrolle 50 entlang der Führungsfläche 52 der Saugkopf 40, ausgehend von der Stellung III, wieder in die Stellung I zurückbewegt wird.

Auf diese Weise können Distanzplättchen 21 ohne Anhalten einer Isolierglasscheibe an deren Rückseite angesetzt werden.

Da für gewöhnlich an Isolierglasscheiben wenigstens vier Distanzplättchen anzubringen sind, werden in der Auslaufstrecke einer Isolierglasherstellungslinie für gewöhnlich wenigstens zwei übereinanderliegend angeordnete Vorrichtungen der beschriebenen Art vorgesehen sein. Es ist aber durchaus möglich und bevorzugt, mehr als zwei solcher Vorrichtungen in die Auslaufstrecke der Isolierglasherstellungslinie übereinander zu integrieren, die in Abhängigkeit von der Größe (Höhe) der Isolierglasscheibe beaufschlagt werden. Dabei wird so vorgegangen, daß die Vorrichtungen im Bereich der oberen und unteren Ecke am vorderen Rand (bezogen auf die Förderrichtung Pfeil 45) zwei Distanzplättchen 21 ansetzen und daß dann zwei weitere Distanzplättchen 21 im Bereich des hinteren Randes angesetzt werden.

Die erfindungsgemäße Vorrichtung kann statt mit horizontal ausgerichteter Grundplatte 1 auch mit im wesentlichen vertikal ausgerichteter Grundplatte in die seitliche Abstützung eines Bauteiles einer Isolierglasherstellungslinie integriert werden.

In einer nicht gezeigten Ausführungsform der erfindungsgemäßen Vorrichtung kann der Saugkopf 40 zum Ansetzen von Distanzplättchen 21 kurzfristig mit Druckluft beaufschlagt werden, um die Distanzplättchen 21 unter der Wirkung der Druckluft an die zugekehrte Glasscheibe einer Isolierglasscheibe anzusetzen. Diese Maßnahme unterstützt das Ansetzen von Distanzplättchen 21. Bei dieser Ausführungsform muß der Saugkopf 40 nicht bis zur zugekehrten Glasscheibe einer Isolierglasscheibe hin bewegt und mit dieser mitbewegbar sein (Bewegung aus der Stellung II in die Stellung III).

## Patentansprüche

1. Vorrichtung zum Ansetzen von Distanzplättchen (21) auf Glasscheiben, insbesondere auf Isolierglasscheiben, mit einer Vorratsspule für einen Streifen (2) aus Kork od. dgl., der einseitig mit einer Klebeschicht bedeckt ist, die durch eine Schutzfolie (3) abgedeckt ist, mit einem Antrieb zum Fördern des Streifens (2) zu einer Schneidvorrichtung (20) und mit einer im Anschluß an die Schneidvorrichtung (20) vorgesehenen, annähernd senkrecht zur Bewegungsrichtung (4) des Streifens (2) vorschiebbaren Andrückeinrichtung (40, 41) für die Schneidvorrichtung (20), dadurch gekennzeichnet, daß die Andrückeinrichtung (40, 41) einen in seiner Ausgangslage (Stellung I) abgabeseitig der Schneidvorrichtung (20) vorgesehenen Saugkopf (40) aufweist, der die vom Streifen (2) abgelängten, noch nicht an die Glasscheibe angesetzten Distanzplättchen (21) erfaßt, und daß der Saugkopf (40) auf die ihm zugewandte Fläche (44) einer Glasscheibe, auf die ein Distanzplättchen (21) anzusetzen ist, hin vorschiebbar ist (Stellung II–III).

2. Vorrichtung nach Anspruch 1, dadurch gekennzeichnet, daß der Saugkopf (40) an einem Träger angeordnet ist, der um eine zur Glasscheibe parallele Achse verschwenkbar gelagert ist, so daß der Saugkopf (40) etwa parallel zur Förderrichtung (45) einer Glasscheibe, auf die Distanzplättchen (21) anzusetzen sind, frei beweglich (Stellung II–III) ist.

3. Vorrichtung nach Anspruch, oder 2, dadurch gekennzeichnet, daß der Träger für den Saugkopf (40) die Kolbenstange (41) eines an der Grundplatte (1) der Vorrichtung, die senkrecht zur Ebene der Glasscheibe, auf die ein Distanzplättchen (21) anzusetzen ist, ausgerichtet ist, verschwenkbar (Achse 43) gelagerten Druckmittelzylinders (42) ist.

4. Vorrichtung nach Anspruch 3, dadurch gekennzeichnet, daß am der Glasscheibe zugekehrten Ende der Kolbenstange (41) neben dem Saugkopf (40) eine Steuerrolle (50) vorgesehen ist, die einer an der Grundplatte (1) angeordneten Leitfläche (52) zugeordnet ist, entlang welcher Leitfläche (52) die Führungsrolle (50) beim Rückhub des Druckmittelmotors (42) entlanggleitet, so daß der Saugkopf (40) wieder in seine Ausgangslage (Stellung I), in welcher er neben der Schneidvorrichtung (20) angeordnet ist, zurückbewegt wird.

5. Vorrichtung nach einem der Ansprüche 1 bis 4, dadurch gekennzeichnet, daß die Schneidvorrichtung (20) einen hohlen Zylinder (22) aufweist, der zwei einander im wesentlichen diametral gegenüberliegende Öffnungen (23 und 24) für den Ein- bzw. den Austritt des Streifens (2) aufweist, und daß im Inneren des hohlen Zylinders (22) ein Schneidmesser (25), das vorzugsweise teilzylindrisch ausgebildet ist, vorgesehen ist und daß der Streifen (2) im hohlen Zylinder (22) der Schneidvorrichtung (20) zwischen der der Achse (26) des hohlen Zylinders (22) zugekehrten Fläche des Schneidmessers (25) und einer in der Nähe der Wand des hohlen Zylinders (22) angeordneten Rolle (30) hindurchgeführt ist.

6. Vorrichtung nach Anspruch 5, dadurch gekennzeichnet, daß das Schneidmesser (25) und die Rolle (30) im hohlen Zylinder (22) um dessen Achse (26) verschwenkbar, vorzugsweise auf einem gemeinsamen Träger gelagert sind.

7. Vorrichtung nach Anspruch 5 oder 6, dadurch gekennzeichnet, daß vor dem hohlen Zylinder (22) der Schneidvorrichtung (20) ein Führungskanal (5) für den Streifen (2) vorgesehen ist, und daß au der Einführseite des Führungskanals (5) der Antrieb (8) zum schrittweisen Vorschieben (Pfeil 4) des Streifens (2) vorgesehen ist.

8. Vorrichtung nach Anspruch 7, dadurch gekennzeichnet, daß der Hub des Antriebes (8) de Breite eines Distanzplättchens (21) entspricht.

9. Vorrichtung nach Anspruch 7 oder 8, dadurch gekennzeichnet, daß der Antrieb (8) für den Streifen (2) eine Reibrolle (9) ist, die mit einem Druckmitttelmotor (11) über einen Hebelarm (13) gekuppelt ist und daß der Hebelarm (13) mit der Reibrolle (19) nur in Richtung des Vorschubes (Pfeil 4) auf Mitnahme gekuppelt ist.

10. Vorrichtung nach Anspruch 9, dadurch gekennzeichnet, daß der Reibrolle (9) gegenüberliegend eine frei drehbare Druckrolle (10) vorgesehen ist, wobei der Streifen (2) zwischen den beiden Rollen (9, 10) durchgeführt ist.

11. Vorrichtung nach einem der Ansprüche 7 bis 10, dadurch gekennzeichnet, daß im Anschluß ar den Führungskanal (5) die Schutzfolie (3) vom Streifen (2) abgezogen und auf eine Spule (18) aufgewickelt wird.

## Revendication

1. Dispositif de pose de plaquettes d'entretoisement (21) sur des vitres, en particulier sur des vitres en verre isolant, comportant une bobine d'alimentation pour une bande (2) en liège ou analogue dont l'une des faces est revêtue d'une couche adhésive elle-même recouverte d'une feuille de protection (3), un dispositif d'entraînement pour faire avancer la bande (2) jusqu'à un dispositif de coupe (20) et un dispositif de poussée (40, 41) pour le dispositif de coupe (20), associé à ce dernier et pouvant être déplacé vers l'avant approximativemen perpendiculairement à la direction de déplacemen (4) de la bande (2), caractérisé par le fait que le dispositif de poussée (40, 41) présente une tête de succion (40) disposée du côté aval du dispositif de coupe (20) dans sa position de départ (position I), la dite tête venant saisir les plaquettes d'entretoisement (21) provenant de la bande (2) et non encore posées sur la vitre et que la tête de succion (40 peut être déplacée vers l'avant en direction de la surface (44) de la vitre qui lui fait face sur laquelle une plaquette d'entretoisement doit être posée (position II–III).

2. Dispositif selon la revendication 1, caractérisé par le fait que la tête de succion (40) est disposée sur un support qui est monté de façon pivotante autour d'un axe parallèle à la vitre, de sorte que la tête de succion (40) puisse se déplacer libremen (position II–III) approximativement parallèlement à la direction de déplacement (45) d'une vitre sur laquelle les plaquettes d'entretoisement (21) doivent être posées.

3. Dispositif selon les revendications 1 ou 2 caractérisé par le fait que le support de la tête de succion (40) est la tige de piston (41) d'un cylindre à fluide sous pression (42) monté pivotant (axe 43) sur la plaque d'assise (1) du dispositif, laquelle est placée perpendiculairement au plan de la vitre sur laquelle une plaquette d'entretoisement (21) doit être posée.

4. Dispositif selon la revendication 3, caractérisé par le fait qu'un galet de pilotage (50) est prévu à côté de la tête de succion (40) à l'extrémité de la tige de piston (41) dirigée vers la vitre, ledit galet coopérant avec une surface de guidage (52) disposée sur la plaque d'assise (1), le galet de guidage (50) glissant le long de ladite surface de guidage (52) lors de la course de retour du moteur à fluide sous pression (42), de sorte que la tête de succion (40) soit replacée dans sa position de départ (position I) dans laquelle elle se trouve à proximité du dispositif de coupe (20).

5. Dispositif selon l'une des revendications 1 à 4, raractérisé par le fait que le dispositif de coupe (20) comporte un cylindre creux (22) qui présente deux ouvertures se faisant face et disposées de façon sensiblement diamétrale (23 et 24) pour l'entrée et la sortie de la bande (2) et qu'une lame de coupe (25), de préférence en forme de paxtie de cylindre, est prévue à l'intérieur du cylindre creux (22), et que la bande (2) est guidée à travers le cylindre creux (22) du dispositif de coupe (20) entre la surface de la lame de coupe (25) qui fait face à l'axe (26) du cylindre creux (12) et un galet (30) placé au voisinage de la paroi du cylindre creux (2Z).

6. Dispositif selon la revendication 5, caractérisé par le fait que la lame de coupe (25) et le galet (30) sont supportés à l'intérieur du cylindre creux (22) de façon à pouvoir pivoter autour de son axe (26), de préférence sur un support commun.

7. Dispositif selon les revendlications 5 ou 6, caractérisé par le fait qu'un canal de guidage (5) pour la bande (2) est prévu en amont du cylindre creux (22) du dispositif de coupe (20) et que l'entraînement (8) pour l'avance pas à pas (flèche 4) de là bande (2) est prévu à l'entrée du canal de guidage (5).

8. Dispositif selon la revendication 7, caractérisé par le fait que la course de l'entraînement (8) correspond à la largeur d'une plaquette d'entretoisement (21).

9. Dispositif selon les revendications 7 ou 8, caractérisé par le fait que l'entraînement (8) pour la bande (2) est un galet de friction (9) accouplé par l'intermédiaire d'un bras de levier (13) à un moteur à fluide sous pression (11), le bras levier (13) étant uniquement entraîné par ledit acccouplement avec le galet de friction (9) dans la direction de l'avance (flèche 4).

10. Dispositif selon la revendication 9, caractérisé par le fait qu'un galet presseur (10) monté à rotation libre est prévu en face du galet de friction (10), la bande (2) étant guidée entre les deux galets (9, 10).

11. Dispositif selon l'une des revendications 7 à 10, caractérisé par le fait que la feuille de protection (3) de la bande (2) est décollée au raccordement du canal de guidage (5) et enroulée sur une bobine (18).

## Claims

1. Apparatus for applying spacer pads (21) to glass sheets, especially insulating glass sheets, the apparatus having a supply reel for supplying a strip (2) of cork or the like which is coated with an adhesive layer masked with a protective foil (3), a drive for feeding the strip (2) to a cutting device (20), and a presser means (40, 41) for the cutting device (20) which is arranged to be advanced in a direction approximately perpendicular to the direction of motion (4) of the strip (2), characterised in that the presser means (40, 41) includes a suction head (40) which is arranged to be on the exit side of the cutting device (20) when in its pick-up mode (position I) for grasping the spacer pads (21) laid along the strip (2) prior to being placed on the glass sheet, and in that the suction head (40) is advanced onto the surface (44) of a glass sheet which is introduced to it and on which a spacer pad (21) is placed (position II–III).

2. Apparatus according to Claim 1, characterised in that the suction head (40) is arranged on a carrier, which is mounted for tilting movement on an axis parallel to the glass sheet, so that the suction head (40) is freely moveable somewhat parallel to the direction (45) of advance of a glass sheet on which the spacer pads (21) are placed (position II–III).

3. Apparatus according to Claim 1 or Claim 2 characterised in that the carrier for the suction head (40) is the piston rod (41) of a piston and cylinder type actuator (42) which is arranged for pivoting movement about an axis (43) on the base plate (1) of the apparatus which is perpendicular to the plane of the glass sheet on which a spacer pad (21) is placed.

4. Apparatus according to Claim 3, characterised in that a guide roll (50) is provided at the end of the piston rod (41) facing towards the glass sheet and adjacent to the suction head (40), the guide roll (50) being in engagement with a guide surface (52) arranged on the base plate (1), with the guide roll (50) running along the said guide surface (52) on the return stroke of the actuator (42), so that the suction head (40) returns to its pick-up position (position I) in which it lies adjacent to the cutting device (20).

5. Apparatus according to one of Claims 1 to 4 characterised in that the cutting device (20) includes a hollow cylinder (22) which has two substantially diametrically opposed openings (23 and 24) for entry and exit of the strip (2) respectively, in that a cutting blade (25), which is preferably formed as part of a cylinder, is provided in the interior of the hollow cylinder (22), and in that the strip (2) is led across and within the hollow cylinder (22) of the cutting device (20) between the surface of the cutting blade (25) facing towards the axis (26) of the hollow cylinder (22) and a roll (30) which is arranged close to the wall of the hollow cylinder (22).

6. Apparatus according to Claim 5, characterised in that the cutting blade (25) and the roll (30) are arranged for swinging movement about the axis (26) of the hollow cylinder (22), preferably on a common carrier member.

7. Apparatus according to Claim 5 or Claim 6, characterised in that a guide channel (5) for the strip (2) is provided upstream of the hollow cylinder (22) of the cutting device (2), and that the drive means (8) for advancing the strip (2) intermittently (arrow 4) is arranged on the entry side of the guide channel (5).

8. Apparatus according to Claim 7, characterised in that the stroke of the drive means (8) corresponds to the width of one spacer pad (21).

9. Apparatus according to Claim 7 or Claim 8, characterised in that the drive means (8) for the strip (2) comprises a friction roller (9) which is coupled with a piston and cylinder type actuator (11) through a lever arm (13), and that the lever arm (13) is coupled with the friction roller (9) in the feed direction (arrow 4) only.

10. Apparatus according to Claim 9, characterised in that the friction roller (9) is arranged in opposite relationship with a freely rotatable draw roller (10), so that the strip (2) is drawn between both the said rollers (9, 10).

11. Apparatus according to one of Claims 7 to 10, characterised in that the protective foil (3) of the strip (2) is peeled off downstream of the guide channel (5) and wound on to a reel (18).

Fig.1

EP 0 334 832 B1

Fig. 2

EP 0 334 832 B1